# EUROPEAN PATENT APPLICATION

(11) **EP 3 453 475 A1**
(43) Date of publication of application: **13.03.2019**
(21) Application number: 18202265.7
(22) Date of filing: 17.04.2015
(51) Int. Cl.: B22F 5/08, C22C 38/00, B22F 3/03, C22C 38/16, F16C 33/12, B22F 3/11, B22F 7/06, B30B 11/02, B30B 15/30

(54) **SINTERED MECHANICAL COMPONENT**

(30) Priority: 22.04.2014 JP 2014088098; 23.07.2014 JP 2014149858
(62) Divisional of application: 15783262.7
(71) Applicant: NTN Corporation, Osaka-shi, Osaka 550-0003 (JP)
(72) Inventor: MATSUDUKI, Takehiro, Aichi, 4978541 (JP); MOURI, Toshihiko, Aichi, 4978541 (JP); NAKAYAMA, Toshio, Aichi, 4978541 (JP); SUGAI, Yousuke, Aichi, 4978541 (JP); TAGA, Seiji, Aichi, 4978541 (JP)
(74) Representative: Eder Schieschke & Partner mbB

(57) **Abstract**

Provided is a sintered gear (1) as a sintered machine part, which is formed of a sintered compact (M') and which rotates in conjunction with an input of a load from another member onto a radially outer surface while sliding with respect to a shaft (S) inserted along an inner periphery, in which the sintered compact (M') includes an inner layer (2) containing Cu and Fe and an outer layer (3) sintered together with the inner layer (2) under a state of being held in contact with the inner layer (2), in which the outer layer (3) includes, as main components, Fe, Cu, and Sn (or Zn or P) as a low-melting-point metal, and a metal structure of the outer layer (3) includes, as main constituents, Fe structures and Cu-Sn alloy structures, which exist at a grain boundary of the Fe structures and bind the Fe structures to each other.

## Description

### Technical Field

The present invention relates to a machine part made of a sintered metal (sintered machine part), a device for molding a green compact, and a method of molding a green compact, and more particularly, to a sintered machine part which rotates in conjunction with an input of a load from another member onto a radially outer surface while sliding with respect to a shaft inserted along an inner periphery.

### Background Art

In recent years, in order to reduce cost and enhance sliding characteristics, there has been an attempt to change, for example, a machine part to be incorporated into a speed reduction mechanism or the like, from a machined product of a metal (ingot material) to a sintered machine part. Of various machine parts, for example, with regard to a planetary gear (idler gear) to be used in a planetary gear speed reduction machine, there is a difference in required characteristics between a radially inner side and a radially outer side. That is, when a load is input onto a radially outer surface of the idler gear from another member (another gear), the idler gear rotates in conjunction with the input while sliding with respect to a shaft inserted along an inner periphery. Therefore, a radially inner surface of the idler gear is required to exhibit an enhanced sliding property, whereas the radially outer side of the idler gear is required to exhibit relatively high mechanical strength so as not to be, for example, deformed and damaged even when a load is repeatedly input from another member. The above-mentioned required characteristics can be concurrently achieved, for example, by individually manufacturing a gear part serving as an outer layer and a bearing part serving as an inner layer, and press-fitting the bearing part along an inner periphery of the gear part (see Patent Literature 1).

However, when the idler gear formed of a sintered compact having a double-layer structure is obtained by press-fitting the bearing part along the inner periphery of the gear part as disclosed in Patent Literature 1, there may occur, for example, deformation due to the press-fitting in at least one of the bearing part and the gear part, and hence there is a risk in that accuracy of each part required for the idler gear as a completed product may not be satisfied. Further, a large number of steps (die and equipment) are required in order to obtain the completed product, and hence there is also a problem in terms of cost.

It is conceivable that such a problem can be solved by employing a method of molding a green compact having a double-layer structure in which a material (metal composition) of a radially inner side is different from that of a radially outer side, as disclosed in Patent Literature 2. Specifically, according to the method described in Patent Literature 2, for example, a green compact in which an outer layer on the radially outer side is formed of first powder having high strength and in which an inner layer on the radially inner side is formed of second powder having excellent sliding property can be obtained by one step (through use of one molding device) . Thus, when the green compact is sintered, a sintered machine part having a double-layer structure, which includes a radially outer side having high strength and a radially inner surface having excellent sliding property, can be obtained at low cost.

Technical measures disclosed in Patent Literature 2 are described more in detail. In Patent Literature 2, there is disclosed a molding device including a cylindrical die configured to mold a radially outer surface of a green compact, a core configured to mold a radially inner surface of the green compact, and a cylindrical upper punch, a lower punch, and a partition member that are lifted and lowered relative to the die. First and second lower punches capable of being independently lifted and lowered are employed as the lower punch. When such a molding device is used, a green compact having a double-layer structure is molded, for example, in the manner as described above.

First, the partition member and the second lower punch placed on a radially inner side of the partition member are arranged at a lifted position, and the first lower punch placed on a radially outer side of the partition member is arranged at a lowered position, to thereby form a first space (cavity) on the radially outer side of the partition member. First powder loaded in a first shoe box is charged into the first space. Next, the second lower punch is lowered to form a second space on the radially inner side of the partition member, and second powder loaded in a second shoe box is charged into the second space. Then, the partition member is lowered, and thereafter the upper punch is lowered, to thereby simultaneously compress the first and second powders in an axial direction. With this, a green compact having a double-layer structure is obtained, for example, in which the radially outer side is formed of a compression molding layer of the first powder having high strength and the radially inner side is formed of a compression molding layer of the second powder having excellent abrasion resistance. Thus, when the green compact is sintered, a machine part (for example, a bearing and a gear) made of the sintered metal, which includes the radially outer side having high strength and the radially inner surface having excellent abrasion resistance, can be obtained. In other words, when the technical measures of Patent Literature 2 are employed, a sintered machine part having different characteristics for regions in a radial direction can be easily obtained.

In Patent Literature 2, there is also described that a green compact having a three-layer structure in which three compression molding layers are laminated in the radial direction is molded by employing first and second partition members capable of being independently lifted and lowered and employing first to third lower punches capable of being independently lifted and lowered. Specifically, the first powder is charged into the first space formed between the die and the first partition member by arranging both the partition members and the second and third lower punches at the lifted position and arranging the first lower punch at the lowered position. After that, the second powder is charged into the second space formed between both the partition members by lowering the second lower punch. After that, third powder is charged into a third space formed between the second partition member and a core by lowering the third lower punch. Then, both the partition members are lowered, and the upper punch is lowered, to thereby simultaneously compress the first to third powders in an axial direction, with the result that the green compact having a three-layer structure is molded.

Theoretically, the technical measures of Patent Literature 2 can also be applied to molding of a green compact including four or more compression molding layers laminated in the radial direction.

### Citation List

Patent Literature 1: JP 07-238880 A Patent Literature 2: JP 2005-95979 A

### Summary of Invention

### Technical Problem

Incidentally, in order to enhance the sliding property with respect to a shaft in the double-layer structure sintered compact described in Patent Literature 2, it is necessary to form the radially inner surface (sliding surface with respect to the shaft) to have a copper-rich layer that is rich in copper content. Meanwhile, in order to secure the high mechanical strength on the radially outer side of the double-layer structure sintered compact, it is necessary to set a metal structure of the outer layer forming the sintered compact to be, for example, a perlite structure containing, as main constituents, iron and carbon. In this case, the green compact is sintered at a high temperature of 1, 130°C or more in order to obtain the perlite structure.

However, when the green compact is sintered at such a high temperature, copper contained in the copper-rich layer is completely melted, and hence a sufficient amount of copper structures cannot be provided on the sliding surface. Meanwhile, the strength required in the radially outer side of the sintered compact cannot be secured by merely lowering the sintering temperature.

Further, the technical measures disclosed in Patent Literature 2 are beneficial in terms of enabling production of, at relatively low cost and with high accuracy, not only a green compact having a multi-layer structure but also a machine part capable of simultaneously satisfying the required characteristics different for regions in the radial direction. However, due to the configuration in which a cavity is formed in a step-by-step manner so as to charge each raw material powder into the cavity, there are problems of prolonged cycle time, and complication in the structure and operation control of a molding die.

In view of the above-mentioned circumstances, a first object of the present invention is to provide a sintered machine part in which the mechanical strength of the radially outer side and the sliding property of the radially inner surface (sliding surface with respect to the shaft) are concurrently enhanced.

Further, a second object of the present invention is to enable the green compact having a multi-layer structure, in which a plurality of compression molding layers are laminated in the radial direction, to be molded efficiently and at low cost, and to enable, through this molding of the green compact, a sintered machine part capable of concurrently satisfying various required characteristics to be manufactured at low cost.

### Solution to Problem

According to a first aspect of the invention of the present application, which is devised to achieve the above-mentioned first object, there is provided a sintered machine part, which is formed of a sintered compact and which rotates in conjunction with an input of a load from another member onto a radially outer surface while sliding with respect to a shaft inserted along an inner periphery, wherein the sintered compact comprises an inner layer containing Cu and an outer layer sintered together with the inner layer under a state of being held in contact with the inner layer, wherein the outer layer comprises, as main components, Fe, Cu, and a low-melting-point metal having a melting point lower than a melting point of Cu, and a metal structure of the outer layer comprises, as main constituents, Fe structures and alloy structures of Cu and the low-melting-point metal, which exist at a grain boundary of the Fe structures and bind the Fe structures to each other.

As described above, when the outer layer forming the sintered compact contains Cu and the metal having a melting point lower than that of Cu (low-melting-point metal), the low-melting-point metal contained in the outer layer (in a strict sense, a portion of the green compact, which becomes the outer layer along with sintering) is first melted during sintering, and a molten liquid thereof diffuses deeply into the inside of each Fe particle through a capillary action. Further, when the molten liquid of the low-melting-point metal wets the surface of each Cu particle, the Cu particle is melted to form an alloy (alloy of Cu and the low-melting-point metal) in a liquid phase state between the Cu particle and the low-melting-point metal, and the alloy in the liquid phase state enters the Fe structures to form structures for binding the Fe structures. With this, the outer layer having high strength in which the Fe structures are strongly bound to each other can be obtained, thereby being capable of securing the relatively high mechanical strength in the outer layer even when the sintering temperature is set to be lower than the melting point of Cu. Meanwhile, when the sintering temperature is set to be lower than the melting point of Cu, the Cu particles contained in the inner layer (in a strict sense, a portion of the green compact, which becomes the inner layer along with sintering) maintain a solid state without being melted by sintering. Therefore, Cu contained in the inner layer is not pulled into the outer layer, with the result that a copper-rich layer in which a large amount of Cu structures are distributed can be formed on the radially inner surface (sliding surface with respect to a shaft) of the inner layer. Thus, an increase in strength of the sintered compact and secured sliding property of the sliding surface with respect to the shaft can be concurrently achieved.

As the low-melting-point metal contained in the outer layer, at least one kind selected from the group consisting of tin (Sn), zinc (Zn), and phosphorus (P) can be used. Further, the concentration of the low-melting-point metal in the outer layer can be set to fall within a range of from 0.5 mass% to 2.0 mass%.

The inner layer can further contain Fe. In this case, when the Cu concentration of the inner layer is set to fall within a range of from 10 mass% to 30 mass%, and the Fe concentration of the inner layer is set to be higher than the Cu concentration, an increase in cost and a decrease in strength due to the excessive use of copper can be prevented as much as possible while the sliding characteristics of the radially inner surface (sliding surface with respect to the shaft) are secured. The inner layer of the sintered machine part to which the present invention is applied is not required to have very high strength. Therefore, when there is no problem, particularly in terms of cost, the inner layer may contain, for example, Cu instead of Fe as a main component.

The outer layer contains Cu in order to bind Fe particles (Fe structures) to each other. When the Cu concentration of the outer layer is set to be lower than the Cu concentration of the inner layer, the use amount of expensive copper is suppressed, thereby being capable of reducing the cost of the sintered machine part.

The outer layer can be sintered together with the inner layer under an atmosphere containing carbon. With this, as compared to the case where sintering is performed under an atmosphere free of carbon (for example, an atmosphere of hydrogen gas, nitrogen gas, argon gas, or mixed gas thereof), the cost required for sintering can be reduced. Further, a perlite phase can be formed in the Fe structures forming the outer layer (further, the Fe structures forming the inner layer in some cases), thereby being capable of increasing the strength of the sintered machine part.

Further, the outer layer may be sintered together with the inner layer under an atmosphere free of carbon. With this, as compared to the case where sintering is performed under an atmosphere containing carbon (for example, an atmosphere of endothermic gas (RX gas) obtained by mixing liquefied petroleum gas such as butane gas or propane gas with air and subjecting the mixture to pyrolysis with a Ni catalyst), the accuracy of both the outer layer and the inner layer can be enhanced.

The inner layer can have a radially inner surface (sliding surface with respect to the shaft) that is a shaped surface shaped through plastic working. With this, the accuracy of the sliding surface can be enhanced easily. Further, a surface opening ratio of the sliding surface can be adjusted in accordance with the working amount of plastic working. Therefore, when inner pores of the inner layer are impregnated with a lubricant such as lubricating oil, the exuding amount of the lubricating oil (ability to form an oil film) with respect to the sliding surface can be adjusted. As the plastic working, for example, sizing processing can be employed.

A concentration gradient of the low-melting-point metal can be formed at an interface between the inner layer and the outer layer. In this case, the alloy structures of Cu and the low-melting-point metal are formed also in the vicinity of the interface between the inner layer and the outer layer, and hence not only the strength of the interface between the inner layer and the outer layer but also the binding strength between the inner layer and the outer layer are increased. The above-mentioned concentration gradient can be obtained, for example, by producing a green compact through use of a so-called two-color molding method involving supplying powder for forming the inner layer and powder for forming the outer layer into the same die to simultaneously subject the powders to compression molding, and thereafter sintering the green compact.

The first aspect of the present invention described above can be suitably applied to a sintered machine part in which the radially outer surface is formed on, for example, a drive force transmission surface such as a tooth surface. The first aspect of the present invention can be suitably applied to, for example, an idler gear or the like formed of a double-layer structure sintered compact. As a matter of course, the first aspect of the present invention is suitably applicable also to another sintered machine part (for example, a pulley) which rotates in conjunction with an input of a load from another member onto the radially outer surface while sliding with respect to the shaft inserted along the inner periphery.

According to a second aspect of the invention of the present application, which is devised to achieve the above-mentioned second object, there is provided a device for molding a green compact, the green compact including a plurality of compression molding layers laminated in a radial direction of the green compact, the device comprising: a molding die comprising a cylindrical die having a cavity formed along an inner periphery of the cylindrical die and a pair of an upper punch and a lower punch configured to be lifted and lowered relative to the cavity; and a powder charging unit configured to charge a plurality of kinds of raw material powders, which are molded into the plurality of compression molding layers, respectively, into the cavity, wherein the powder charging unit comprises a partition member which is arranged so as to be inserted into and removed from the cavity and which enables, at a time of being inserted into the cavity, the plurality of kinds of raw material powders to be charged into the cavity under a state in which the plurality of kinds of raw material powders are mutually separated in the radial direction.

The term "radial direction of the green compact" as used herein refers to "radial direction of the green compact to be molded" in a strict sense (the same applies hereinafter).

In the molding device having the above-mentioned configuration, when the green compact including the plurality of compression molding layers laminated in the radial direction is molded, the plurality of kinds of raw material powders, which are molded into the compression molding layers, are simultaneously charged into the cavity of the molding die under the state in which the plurality of kinds of raw material powders are mutually separated in the radial direction. Then, the above-mentioned mutually separated state is cancelled, and thereafter, the plurality of kinds of raw material powders can be simultaneously compressed. The term "mutually separated state" refers to "state in which the plurality of kinds of raw material powders are mutually separated in the radial direction" in a strict sense (the same applies hereinafter).

Specifically, according to the above-mentioned molding device (and molding method), the plurality of kinds of raw material powders can be charged into the cavity under a state in which the plurality of kinds of raw material powders are laminated in the radial direction of the green compact to be molded, merely through the procedures of (1) inserting the partition member arranged in the single powder charging unit loaded with the plurality of kinds of raw material powders into the cavity (arranging the partition member into the cavity), and in this state, simultaneously charging the plurality of kinds of raw material powders into the cavity from the powder charging unit, and thereafter (2) removing the partition member arranged in the cavity from the cavity. In other words, according to the present invention, when the plurality of kinds of raw material powders are charged into the cavity under a state in which the plurality of kinds of raw material powders are laminated in the radial direction, it is not necessary to operate a plurality of shoe boxes (corresponding to the powder charging unit) in a step-by-step manner to charge the raw material powders into the cavity in a step-by-step manner, or to use a molding die comprising a plurality of lower punches and partition members that are independently lifted and lowered to operate the plurality of lower punches and partition members in a step-by-step manner, as in the related art. Therefore, not only a period of time required from the start of the operation of the molding device to the completion of the charging of the powders into the cavity but also one cycle time for molding of a green compact can be significantly shortened. Further, the molding device can be simplified and reduced in size as a whole. Thus, according to the second aspect of the invention of the present application, a green compact having a multi-layer structure including the plurality of compression molding layers laminated in the radial direction can be molded efficiently and at low cost.

In the above-mentioned molding method, the plurality of kinds or raw material powders are arranged in the outer portion of the molding die without the cavity under a state in which the plurality of kinds of raw material powders are mutually separated in the radial direction, and thereafter, the movable side and the stationary side of the molding die are relatively moved while the mutually separated state is maintained. Thus, the formation of the cavity and the simultaneous charging of the plurality of kinds of raw material powders into the cavity can be simultaneously performed. As a result, the raw material powders can be charged into the cavity smoothly and efficiently.

It is preferred that the operation of cancelling the above-mentioned mutually separated state be performed under a state in which at least one kind of the plurality of kinds of raw material powders (to be charged into the cavity) can be replenished into the cavity. This is for the purpose of filling the space, which is formed in the cavity along with the operation of cancelling the mutually separated state (along with the removal of the partition member from the cavity), with the raw material powders, to thereby enable a green compact having predetermined density to be molded.

In the molding device having the above-mentioned configuration, there may be employed the molding die comprising a core arranged along the inner periphery of the cylindrical die and configured to mold a radially inner surface of the green compact. With this, a cylindrical green compact can be molded.

In the molding device having the above-mentioned configuration, the powder charging unit may be configured to reciprocally move (shift) between a charging position at which the powder charging unit is capable of charging the plurality of kinds of raw material powders into the cavity and a retreated position at which the powder charging unit is separated from the cavity in the radial direction. With this, a device failure caused by the interference between the powder charging unit and the upper punch can be prevented reliably.

Incidentally, in the molding device having the above-mentioned configuration, when the plurality of kinds of raw material powders are charged into the cavity from the powder charging unit (when the powder charging unit is positioned at the charging position), it is necessary to prevent the powder charging unit and the upper punch from interfering with each other. Therefore, it is necessary that a vertically separated distance between an upper surface of the die and a lower surface of the upper punch during the execution of a powder charging process be sufficiently secured. However, after the completion of the powder charging process, it is necessary to perform a powder compressing process of relatively bringing the upper punch close to the lower punch to compress the raw material powders charged into the cavity with the upper punch and the lower punch. Therefore, when the vertically separated distance during the powder charging process is excessively large, it is necessary to use a large press unit having a large stroke amount in a vertical direction as a press unit configured to lift and lower the upper punch (apply a downward pressurizing force to the upper punch).

In view of the foregoing, as the above-mentioned molding device, there is used a molding device further comprising a lifting and lowering unit configured to hold the upper punch so as to lift and lower the upper punch, wherein the lifting and lowering unit comprises a movable spacer configured to reciprocally move (shift) between a pressurizing position, at which the lifting and lowering unit is capable of applying, to the upper punch, a pressurizing force for compressing the plurality of kinds of raw material powders in the cavity between the upper punch and the lower punch, and a non-pressurizing position, at which the lifting and lowering unit is prevented from applying the pressurizing force to the upper punch, and wherein the movable spacer is configured to move from the non-pressurizing position to the pressurizing position along with downward movement of the upper punch and move from the pressurizing position to the non-pressurizing position along with upward movement of the upper punch.

With this, through selection and use of the movable spacer having an appropriate vertical dimension, the vertically separated distance (large space) can be secured between the die and the upper punch so that the upper punch and the powder charging unit do not interfere with each other during the powder charging process. Meanwhile, the stroke amount of the upper punch in the vertical direction, which is required for performing the powder compressing process, can be reduced. Thus, excessive increase in size of not only in the press unit configured to pressurize the upper punch downward but also in the molding device can be prevented.

The movable spacer is configured to advance and retreat in the radial direction of the green compact, thereby being capable of reciprocally moving between the pressurizing position and the non-pressurizing position. With this, as a drive mechanism configured to reciprocally move the movable spacer between the above-mentioned two positions, a mechanism having a simple structure, for example, an air cylinder, can be employed.

The lifting and lowering unit may further comprise a guide member configured to guide the reciprocal movement of the movable spacer between the two positions. With this, the movable spacer can be guided and moved accurately to the predetermined pressurizing position, and hence the raw material powders charged into the cavity can be appropriately compressed.

### Advantageous Effects of Invention

With the foregoing, according to the first aspect of the invention of the present application, a sintered machine part having higher mechanical strength in the radially outer side and enhanced sliding property in the radially inner surface can be provided at low cost.

Further, according to the second aspect of the invention of the present application, a green compact having a multi-layer structure including a plurality of compression molding layers laminated in the radial direction can be provided efficiently and at low cost.

### Brief Description of Drawings

FIG. 1 is a schematic front view of a sintered machine part according to a first embodiment of a first aspect of the invention of the present application.
FIG. 2A is an enlarged view for schematically illustrating structures of an inner layer.
FIG. 2B is an enlarged view for schematically illustrating structures of an outer layer.
FIG. 3 is a sectional view for illustrating a state in which first powder is charged into a molding die device for a green compact to be processed into a sintered gear illustrated in FIG. 1.
FIG. 4 is a sectional view for illustrating a state in which second powder is charged into the molding die device.
FIG. 5 is a sectional view for illustrating a state in which a partition member is lowered in the molding die device.
FIG. 6 is a sectional view for illustrating a state in which surplus powder is removed in the molding die device.
FIG. 7 is a sectional view for illustrating a state in which the powder is compressed in the molding die device.
FIG. 8 is a sectional view for illustrating a state in which a green compact is removed from the molding die device.
FIG. 9 is a schematic view of a sintering furnace to be used in a sintering step.
FIG. 10 is a sectional view for schematically illustrating a dimension correcting step for a sintered compact.
FIG. 11 is a view for schematically illustrating production procedures after a compressing molding step.
FIG. 12 is a graph for showing a concentration gradient of a low-melting-point metal.
FIG. 13A is a vertical sectional view of a sintered machine part formed by sintering a green compact molded by a molding method according to a second aspect of the invention of the present application.
FIG. 13B is a lateral sectional view of the sintered machine part.
FIG. 14 is a front view including a partial section of a molding device for a green compact according to one embodiment of the second aspect of the present invention, for illustrating an initial state of the molding device.
FIG. 15 is a view for illustrating a state in which a powder charging unit has moved to a charging position in the molding device .
FIG. 16 is a view for illustrating a state in which raw material powder is charged into a cavity in the molding device.
FIG. 17 is a view for illustrating a state in which charging of the powder into the cavity is completed in the molding device.
FIG. 18 is a view for illustrating a state in which the powder charging unit has moved to a retreated position after charging of the powder into the cavity is completed in the molding device.
FIG. 19 is a plan view of the molding device as viewed from the direction of the arrow Y1 illustrated in FIG. 18.
FIG. 20 is a view for illustrating a state immediately after a compressing process for the raw material powder is started in the molding device.
FIG. 21 is a view for illustrating a state in which the compressing process of the raw material powder proceeds to some extent in the molding device.
FIG. 22 is a view for illustrating a compressed state of the raw material powder in the molding device.

### Description of Embodiments

Now, an embodiment of a first aspect of the invention of the present application is described with reference to the drawings.

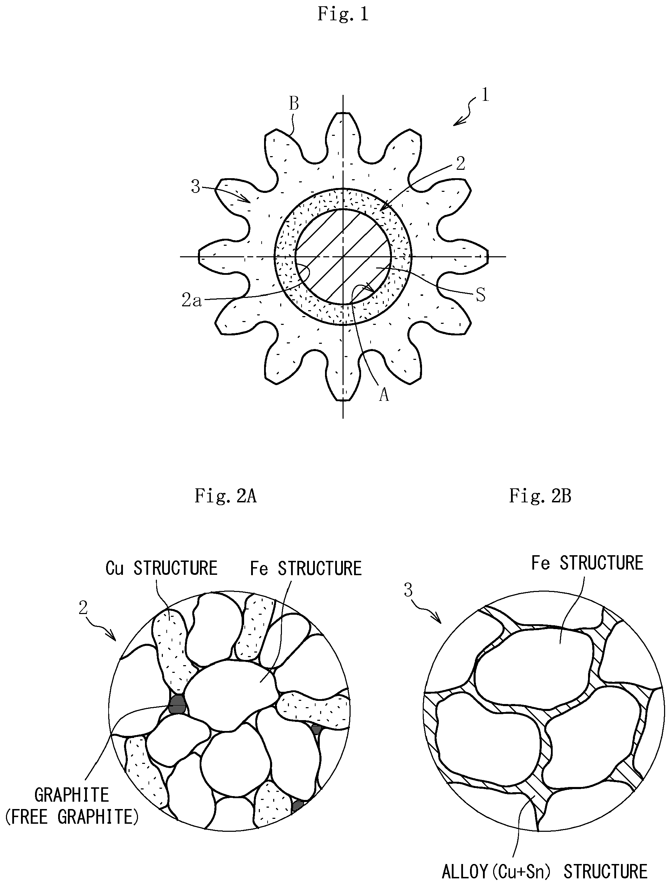

FIG. 1 is an illustration of one example of a sintered gear 1 serving as a sintered machine part according to the embodiment of the first aspect of the present invention. The sintered gear 1 is used as, for example, a planetary gear (idler gear) constructing a planetary gear speed reduction machine. More specifically, the sintered gear 1 is used, for example, under a state of being loosely fitted over an outer periphery of a shaft S. Further, for example, when a sun gear (not shown) arranged on a radially inner side of the sintered gear 1 rotates, the sintered gear 1 rotates upon receiving the rotation of the sun gear, while sliding with respect to the shaft S, and an inner gear (not shown) arranged on a radially outer side of the sintered gear 1 rotates. With this, rotation torque of the sun gear is transmitted to the inner gear through the sintered gear 1.

The sintered gear 1 illustrated in FIG. 1 integrally comprises an inner layer 2 having a radially inner surface 2a serving as a sliding surface A with respect to the shaft S and an outer layer 3 having a tooth surface serving as a load acting surface (drive force transmission surface configured to transmit a drive force between the sun gear and the inner gear) B that receives a load from another member (in this case, the sun gear and the inner gear) under a state in which the inner layer 2 and the outer layer 3 are held in contact with each other. In this embodiment, in the sintered gear 1, the radially inner surface 2a (sliding surface A) of the inner layer 2 is set to be a shaped surface shaped through plastic working, whereas the radially outer surface (load acting surface B) of the outer layer 3 is not set to be a shaped surface as in the sliding surface A. Thus, a surface opening ratio of the sliding surface A is lower than that of the load acting surface B (tooth surface).

Inner pores of the sintered gear 1 are impregnated with lubricating oil, such as mineral oil or synthetic oil, as a lubricant. Therefore, when the sintered gear 1 rotates about the shaft S, the lubricating oil held in the inner pores of the inner layer 2 exudes from surface openings of the radially inner surface 2a of the inner layer 2, to thereby form an oil film of the lubricating oil between the radially inner surface 2a (sliding surface A) and an outer peripheral surface of the shaft S. With this, abrasion of the sliding surface A is suppressed or prevented. Oil content of the entire sintered gear 1 is, for example, from 10 vol% to 25 vol%, preferably from 15 vol% to 25 vol%. When the oil content is less than 10 vol%, desired lubricating characteristics cannot be maintained and exhibited stably over a long period of time. This is because, when the oil content is more than 25 vol%, the inner pore ratio is increased, and hence there is a risk in that the mechanical strength required in the entire sintered gear 1 may not be secured.

Further, when viscosity of the lubricating oil impregnating the inner pores of the sintered gear 1 is too low, there is a risk in that the lubricating oil is liable to flow out, and oil film rigidity is decreased, with the result that an abrasion suppressing effect of the sliding surface A becomes insufficient. Meanwhile, when the viscosity of the lubricating oil is too high, the exuding amount of the lubricating oil from the surface openings of the sliding surface A becomes insufficient, and there is a risk in that an oil film having a predetermined thickness and rigidity may not be formed. In view of the foregoing, the lubricating oil has a kinetic viscosity at 40°C of preferably about 5 mm²/s or more and about 600 mm²/s or less, more preferably about 30 mm²/s or more and about 550 mm²/s or less, still more preferably about 50 mm²/s or more and about 500 mm²/s or less.

The inner pores of the sintered gear 1 may be impregnated with liquid grease instead of the above-mentioned lubricating oil. As the liquidgrease, there can be used, for example, grease comprising lubricating oil having a kinetic viscosity at 40°C within the above-mentioned range as base oil, in which a soap-based thickener such as lithium soap or a nonsoap-based thickener such as urea is added to the base oil.

The sintered gear 1 described above has different metal compositions between the inner layer 2 and the outer layer 3. As illustrated in FIG. 2A, the inner layer 2 according to this embodiment is formed of a Cu-Fe-based sintered metal comprising, as main constituents, Fe structures containing Fe as a base material and Cu structures formed of Cu, in which the adjacent metal structures are bound to each other in a solid phase. In the metal structures of the inner layer 2, graphite (free graphite) is scattered. Although not illustrated in detail, each Fe structure has a perlite phase at least in a surface layer portion. In the inner layer 2, the content of the Fe structures is larger than that of the Cu structures, and the content of graphite is smallest. Specifically, the inner layer 2 comprises, for example, Cu by 10 mass% to 30 mass% (preferably 15 mass% to 20 mass%), C (free graphite) by 0.5 mass% to 3 mass%, and the remainder formed of Fe and inevitable impurities. A ratio of the metals (elements) forming the inner layer 2 substantially follows a blending ratio of various powders in second powder M2 described later.

Meanwhile, as illustrated in FIG. 2B, the outer layer 3 is formed of a so-called Fe-Cu-Sn-based sintered metal comprising, as main constituents, Fe structures containing Fe as a base material and alloy structures of Cu and a low-melting-point metal (in this case, a Cu-Sn alloy metal), which exist between the Fe structures and bind the Fe structures to each other. Although not illustrated in detail, each Fe structure forming the outer layer 3 has a perlite phase at least in a surface layer portion as in the Fe structures forming the inner layer 2. In the outer layer 3, the content of the Fe structures is larger than that of the Cu-Sn alloy structures. That is, when the Fe concentration of the outer layer 3 is compared to the Cu concentration thereof, the Fe concentration is larger than the Cu concentration. Further, the Cu concentration of the outer layer 3 is smaller than the Cu concentration of the inner layer 2. Specifically, the outer layer 3 comprises, for example, Cu by 1 mass% to 10 mass% (preferably 2 mass% to 5 mass%), Sn by 0.5 mass% to 2.0 mass%, and the remainder formed of Fe and inevitable impurities. A ratio of the metals (elements) forming the outer layer 3 substantially follows a blending ratio of various powders in first powder M1 described later.

The sintered gear 1 having the above-mentioned configuration is manufactured, mainly through a compression molding step, a sintering step, a dimension correcting step, and an oil impregnation step in the stated order. Now, an embodiment of each step is described in detail.

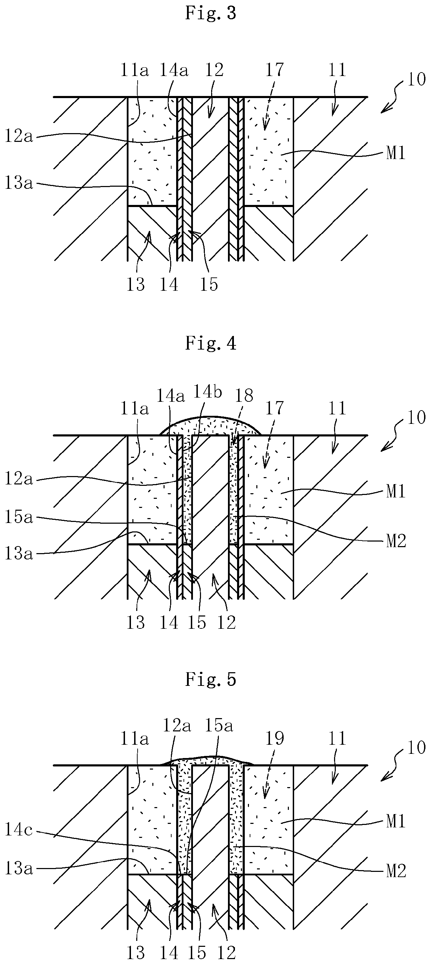

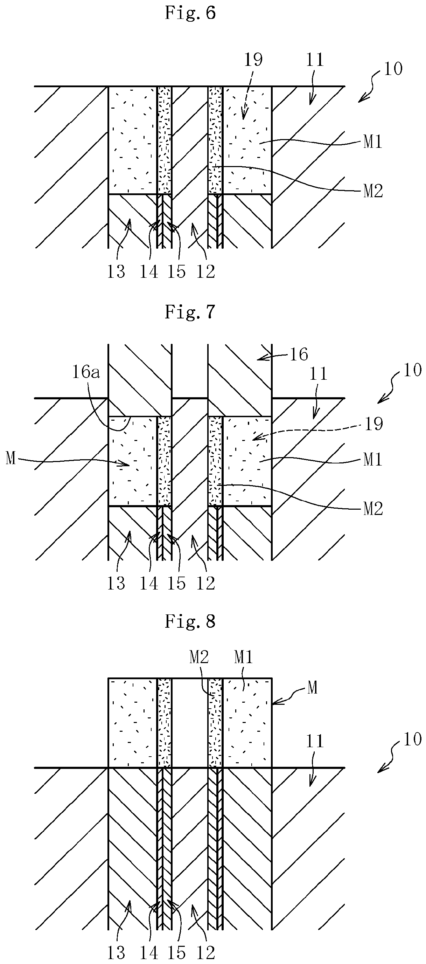

The compression molding step is a step of obtaining a green compact M (see FIG. 8) substantially conforming to the shape of the sintered gear 1. In this case, the green compact M is obtained by employing a so-called two-color molding method involving supplying the first powder M1 serving as powder for forming the outer layer 3 and the second powder M2 serving as powder for forming the inner layer 2 into the same die, to thereby simultaneously compress the powders. The two-color molding comprises charging the powders into two cavities formed in the die and subjecting both the powders to compression molding. The two-color molding is performed through use of, for example, a molding die device 10 illustrated in FIG. 3 to FIG. 8.

A specific configuration of the molding die device 10 is described with reference to FIG. 3. The molding die device 10 comprises a die 11 configured to mold a radially outer surface of the green compact M, a core 12 arranged along an inner periphery of the die 11 and configured to mold a radially inner surface of the green compact M, a first lower punch 13, a partition member 14, and a second lower punch 15, which are arranged between the die 11 and the core 12 and configured to mold one end surface of the green compact M, and an upper punch 16 (see FIG. 8) configured to mold another end surface of the green compact M. The first lower punch 13, the partition member 14, and the second lower punch 15 can be independently lifted and lowered.

In the molding die device 10 having the above-mentioned configuration, first, as illustrated in FIG. 3, the partition member 14 and the second lower punch 15 are lifted to a top dead center, and the first lower punch 13 is lowered to a bottom dead center, to thereby form a first cavity 17 having a lateral sectional shape conforming to that of the outer layer 3 with an inner peripheral surface 11a of the die 11, an outer peripheral surface 12a of the core 12, an outer wall surface 14a of the partition member 14, and an upper end surface 13a of the first lower punch 13. After the first cavity 17 is formed, the first powder M1 is charged into the first cavity 17. The composition of the first powder M1 is described later.

Next, as illustrated in FIG. 4, the second lower punch 15 is lowered to a bottom dead center, to thereby form a second cavity 18 having a lateral sectional shape conforming to that of the inner layer 2 with an inner wall surface 14b of the partition member 14, the outer peripheral surface 12a of the core 12, and an upper end surface 15a of the second lower punch 15. The presence of the partition member 14 may cause the second cavity 18 to be formed under a state of being isolated from the first cavity 17. After the second cavity 18 is formed as described above, the second powder M2 is charged into the second cavity 18. In this case, the second powder M2 is caused to overflow the second cavity 18 so as to cover an upper portion of the partition member 14. The composition of the second powder M2 is described later.

Next, when the partition member 14 is lowered as illustrated in FIG. 5, the second powder M2 covering the upper portion of the partition member 14 is charged into a space formed by removing the partition member 14, and the first powder M1 and the second powder M2 are brought into contact with each other. With this, a cavity 19 formed by the inner peripheral surface 11a of the die 11, the upper end surfaces 13a and 15a of both the lower punches 13 and 15, an upper end surface 14c of the partition member 14, and the outer peripheral surface 12a of the core 12 is filled with the first powder M1 and the second powder M2. Then, as illustrated in FIG. 6, the surplus second powder M2 overflowing the cavity 19 is removed.

Then, as illustrated in FIG. 7, the upper punch 16 is lowered to simultaneously compress the first and second powders M1 and M2 charged into the cavity 19, to thereby mold the green compact M of the first and second powders M1 and M2. After the green compact M is molded, as illustrated in FIG. 8, both the lower punches 13 and 15 and the partition member 14 are lifted, and the green compact M is removed from the molding die 10.

In this case, the first powder M1 is mixedpowder obtained by mixing iron powder, copper powder, and low-melting-point metal powder as main component powders, and a small amount of a wax-based filler is added to the mixed powder for the purpose of improving the moldability of a green compact. As the iron powder to be contained in the first powder M1, powder that is generally used for forming a sintered metal can be used without problems. For example, reduced iron powder, atomized iron powder, or a mixture thereof can be used. In this embodiment, porous reduced iron powder excellent in an oil impregnation property is used. It is preferred that the iron powder (reduced iron powder) to be used have a grain size of from 40 µm to 150 µm and an apparent density of from about 2.0 g/cm³ to about 2.8 g/cm³. The apparent density as used herein is based on JIS Z8901 (the same applies hereinafter). Further, as the copper powder, powder that is generally used for forming a sintered metal can be used without problems. For example, electrolytic copper powder, atomized copper powder, or a mixture thereof can be used. It is preferred that the copper powder to be used have a grain size of from 20 µm to 100 µm and an apparent density of from about 2.0 g/cm³ to about 3.3 g/cm³. As the low-melting-point metal powder, powder of a metal having a melting point lower than that of copper, specifically, a metal having a melting point of about 700°C or less can be used. For example, at least one kind selected from the group consisting of tin (Sn) powder, zinc (Zn) powder, phosphorus (P) powder, and the like is used. In this embodiment, Sn powder having a grain size of from 10 µm to 50 µm and an apparent density of from about 1.8 g/cm³ to about 2.6 g/cm³ is used.

As the first powder M1, alloy steel powder of iron and a low-melting-point metal (at least one kind selected from the group consisting of phosphorus, zinc, tin and the like) having copper powder mixed therewith may be used.

A specific blending ratio of each powder in the first powder M1 according to this embodiment is, for example, Cu powder by 1 mass% to 10 mass% (preferably 2 mass% to 5 mass%), Sn power by 0.5 mass% to 2.0 mass%, and the remainder formed of Fe powder. The blending ratio of the Sn powder with respect to the Cu powder is 1/5 or more and 1 or less in a weight ratio. The reason for setting the blending ratio of each powder as described above is as follows. First, the copper powder is blended in order to bind the Fe powder (bind the Fe structures forming the outer layer 3 formed of a sintered compact) during sintering of the green compact M, and hence the strength of the outer layer 3 is decreased when the blending amount of the copper powder is too small. However, when the blending amount of the Cu powder is increased, the blending ratio of the Cu powder that is remarkably expensive as compared to the Fe powder is increased to raise cost of the sintered gear 1, and the blending ratio of the Fe powder is decreased to lower the strength of the outer layer 3. Next, the Sn powder is blended in order to form the Cu-Sn alloy structures for binding the Fe structures of the outer layer 3 when the Cu powder is melted during sintering of the green compact M. Therefore, when the blending amount of the Sn powder is too small, the strength of a sintered compact M' (outer layer 3) cannot be increased sufficiently. However, when the blending amount of the Sn powder is too large, there is a risk in that cost of the sintered compact M' may be increased. In view of the foregoing, the blending ratios of the Cu powder and the Sn powder are set to fall within the above-mentioned ranges.

Meanwhile, the second powder M2 is mixed powder of Fe powder and Cu powder. In this embodiment, graphite powder is further mixed with the mixed powder. A blending ratio of each powder in the second powder M2 is, for example, Cu powder by 10 mass% to 30 mass% (preferably 15 mass% to 20 mass%), graphite power by 0.5 mass% to 3 mass% of graphite powder, and the remainder formed of Fe powder. When the blending ratio of the Cu powder is too low, the sliding property of the sliding surface A is degraded. When the blending ratio of the Cu powder is too high, there arises a problem in abrasion resistance of the sliding surface A. Thus, the blending ratio of the Cu powder is set to fall within the above-mentioned range. Further, the graphite powder is blended so as to remain as free graphite in the sintered compact M' (inner layer 2) to serve as a solid lubricant in the inner layer 2. Therefore, when the blending ratio of the graphite powder is too low, an effect of the graphite powder as the solid lubricant is degraded. However, when the blending ratio of the graphite powder is too high, powder segregation, degradation in flowability, and degradation in a powder charging property are caused because graphite has a specific gravity lower than that of Fe and Cu. Therefore, the blending ratio of the graphite powder is set to fall within the above-mentioned range.

Incidentally, due to the difference in composition between the first powder M1 and the second powder M2, a difference is inevitably caused in apparent density between both the powders M1 and M2, and the apparent density difference between both the powders M1 and M2 may cause a problem in that part of the green compact M collapses when both the powders M1 and M2 are simultaneously compressed to mold the green compact M. However, as in this embodiment, when the inner layer 2 to be formed is thinner than the outer layer 3, and the apparent density of the first powder M1 corresponding to the outer layer 3 is lower than that of the second powder M2 corresponding to the inner layer 2 (specifically, the density difference between both the powders is 0.5 g/cm³ or less), the green compact M can be molded with high accuracy even when both the powders M1 and M2 are simultaneously compressed. Thus, it is preferred that the apparent density of the first powder M1 be set to be lower than that of the second powder M2, and the density difference therebetween be set to 0.5 g/cm³ or less.

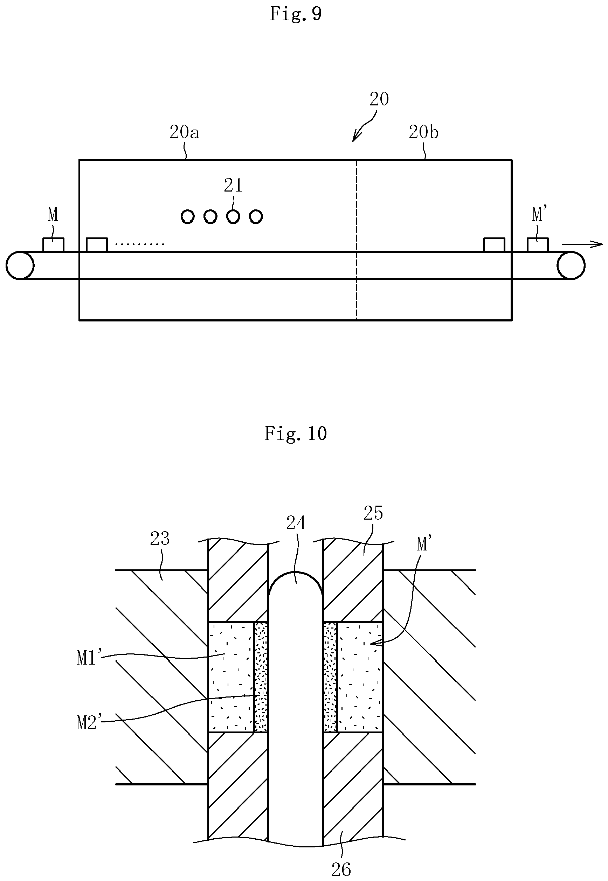

The green compact M obtained as described above is transferred to the sintering step. The sintering step can be performed through use of a continuous sintering furnace 20 continuously comprising a sintering zone 20a in which heaters 21 are installed and a cooling zone 20b configured to perform natural heat radiation as illustrated in FIG. 9. Sintering of the green compact M is performed under an atmosphere of gas containing carbon. As the gas containing carbon, endothermic gas (CO, CO₂-containing gas/RX gas) is used, which is obtained by mixing liquefied petroleum gas such as butane gas or propane gas with air and subjecting the mixture to pyrolysis with a Ni catalyst. The sintering temperature is set to be higher than the melting point of the low-melting-point metal powder (in this case, Sn powder) contained in the green compact of the first powder M1 and to be lower than the melting point of Cu. However, in this embodiment, the sintering temperature is set to a temperature (about 727°C) at which carbon in the graphite powder contained in the green compact of the second powder M2 starts reacting with iron. Specifically, the sintering temperature is set to preferably about 727°C or more and about 900°C or less, more preferably about 750°C or more and about 880°C or less. This temperature is lower than a general sintering temperature for obtaining an iron-based sintered compact.

When the green compact M is sintered under the above-mentioned sintering condition, the sintered compact M' (see FIG. 9 to FIG. 11) is obtained. During sintering of the green compact M, the green compact of the first powder M1 is sintered together with the green compact of the second powder M2 under a state of being held in contact with the green compact of the second powder M2. Therefore, when the green compact M is sintered, the sintered compact M' can be obtained, in which a portion M1' to be the outer layer 3 and a portion M2' to be the inner layer 2 are integrated. Along with sintering, the wax-based filler contained as a lubricant in the green compact of the first powder M1 is volatilized.

The sintered compact M' obtained in the sintering step is transferred to the dimension correcting step, and a predetermined part of the sintered compact M' is subjected to dimension correction processing. With this, the sintered compact M' is formed into a completed product shape. In this embodiment, as illustrated in FIG. 10, a radially inner surface of the sintered compact M' is subjected to sizing as plastic working through use of a die device comprising a die 23, a core 24, and upper and lower punches 25 and 26 arranged coaxially, to thereby form the radially inner surface of the sintered compact M' into the completed product shape. A radially outer surface of the sintered compact M' exhibits a complicated tooth surface shape conforming to a radially outer surface of the sintered gear 1, and the tooth surface is not required to have such accuracy as required in the sliding surface A. Therefore, the dimension correction processing to the radially outer surface of the sintered compact M' is omitted in this embodiment. With the foregoing, the radially inner surface 2a (sliding surface A) of the inner layer 2 is set to a shaped surface shaped through plastic working, whereas the radially outer surface (load acting surface B) of the outer layer 3 is not set to a shaped surface as in the sliding surface A. When the inner pores of the sintered compact M' are impregnated with a lubricant (lubricating oil or liquid grease described above) in the oil impregnation step after the dimension correcting step is performed, the sintered gear 1 illustrated in FIG. 1 and the like is completed.

During sintering in the sintering step illustrated in FIG. 9, in the green compact M, the low-melting-point metal (Sn) powder contained in the green compact of the first powder M1 is first melted. A molten liquid of Sn diffuses deeply into the inside of each Fe particle through a capillary action. Further, when the molten liquid of Sn wets a surface of each Cu particle contained in the first powder M1, the Cu particle is melted at a temperature lower than the melting point of Cu, and hence the melted Cu and Sn form a Cu-Sn alloy in a liquid phase state. The Cu-Sn alloy in the liquid phase state enters the Fe structures to form Cu-Sn alloy structures for binding the Fe structures. With this, the outer layer 3 in which the Fe structures are strongly bound to each other can be obtained, and hence the high mechanical strength can be secured in the outer layer 3 even when the sintering temperature of the green compact M is set to be lower than the melting point of Cu. In particular, in this embodiment, sintering of the green compact M is performed under an atmosphere of gas containing carbon, and hence a perlite phase having high hardness is formed at least in a surface layer portion of each Fe structure forming the outer layer 3. Thus, even when the sintering temperature of the green compact M is set to be sufficiently lower than the general sintering temperature for obtaining an iron-based sintered compact, the strength required in the outer layer 3 can be secured.

Further, the sintering temperature of the green compact M is set to be lower than the melting point of Cu, and hence the Cu powder contained in the green compact of the second powder M2 is not melted along with sintering and maintains a solid state. Therefore, Cu contained in the inner layer 2 is not pulled into the outer layer 3, with the result that a copper-rich layer in which a large amount of Cu structures are distributed can be formed in the sliding surface A with respect to the shaft S. Further, the sintering temperature of the green compact M is set to fall within the above-mentioned range, and hence the graphite powder contained in the green compact of the second powder M2 diffuses along with sintering of the green compact M, and excessive graphite remains as free graphite in the metal structures of the inner layer 2 as illustrated in FIG. 2A. At least part of the graphite powder remaining in the metal structures of the inner layer 2 is exposed to the sliding surface A with respect to the shaft S to serve as a solid lubricant.

Further, the inner layer 2 contains Fe, and the Fe concentration is larger than the Cu concentration. Therefore, an increase in cost and a decrease in strength due to the excessive use of Cu can be prevented as much as possible while the sliding property of the sliding surface A with respect to the shaft S is secured. Further, the outer layer 3 contains Cu for binding the Fe structures, but the Cu concentration of the outer layer 3 is smaller than that of the inner layer 2. Therefore, an increase in cost of the sintered gear 1 can be suppressed by reducing the use amount of expensive Cu.

With the foregoing, the sintered gear 1 can be obtained at low cost, which secures the mechanical strength required in the outer layer 3 having the load acting surface B that receives a load from another gear while the satisfactory sliding property and abrasion resistance are secured in the sliding surface A with respect to the shaft S arranged in the inner layer 2.

Further, the sliding surface A with respect to the shaft S arranged on the radially inner surface 2a of the inner layer 2 is set to a shaped surface shaped through plastic working (sizing), and hence the abrasion resistance can be improved. Further, the sliding surface A is substantially subjected to filling processing along with sizing, and hence the exuding amount of the lubricating oil impregnating the inner pores of the sintered gear 1 with respect to the sliding surface A can be optimized. With this, even when the sintered gear 1 slides repeatedly with respect to the shaft S, the abrasion of the sliding surface A of the sintered gear 1 can be effectively suppressed.

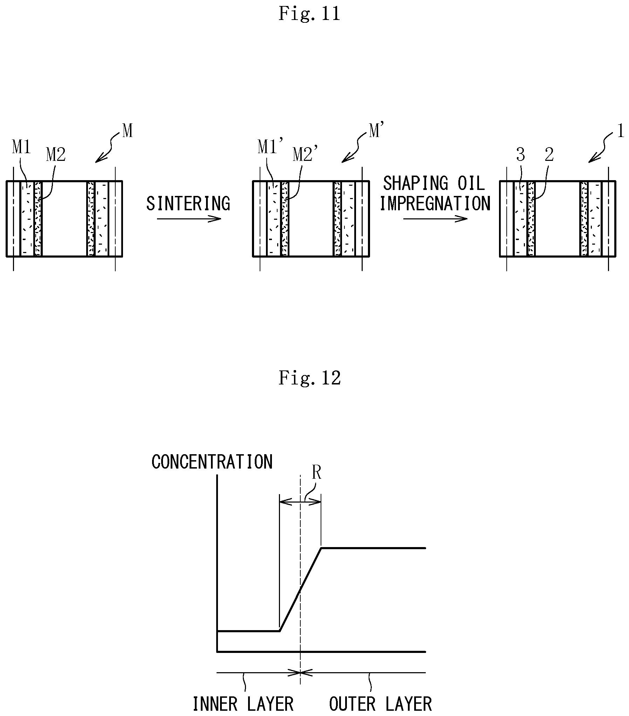

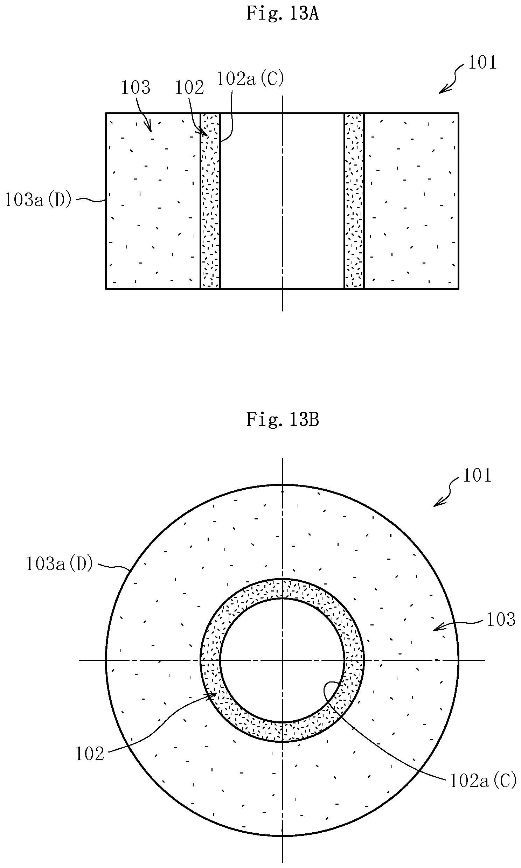

The second powder M2 for forming the inner layer 2 does not contain Sn powder, and hence the inner layer 2 does not contain Sn theoretically. However, in relation to the procedure of the compression molding step illustrated in FIG. 3 to FIG. 8, inactuality, a concentration gradient of Sn is formed at the interface between the inner layer 2 and the outer layer 3 as illustrated in FIG. 12. With this, the Cu-Sn alloy structures for binding the Fe structures exist in the vicinity of the interface between the inner layer 2 and the outer layer 3, and hence the binding strength between the inner layer 2 and the outer layer 3 is enhanced. For the above-mentioned reasons, the Cu-Sn alloy structures do not exist in a region of the inner layer 2 (for example, the sliding surface A) sufficiently separated from the outer layer 3. A radial dimension R of a layer in which the concentration gradient of Sn is formed can be adjusted by a thickness of the partition member 14 (see FIG. 13 and the like) arranged in the molding die device 10.

The sintered gear 1 serving as a sintered machine part according to the first embodiment of the first aspect of the present invention and the manufacturing method therefor are described above. However, the embodiment of the first aspect of the present invention is not limited to the foregoing.

For example, in the first embodiment described above, the green compact M is sintered under an atmosphere of gas containing carbon (RX gas). However, the green compact M may be sintered under an atmosphere of gas free of carbon (for example, an atmosphere of hydrogen gas, nitrogen gas, argon gas, or mixed gas thereof) or under vacuum. In this case, the Fe structures forming the inner layer 2 and the outer layer 3 comprise, as a main constituent, a relatively soft ferrite phase rather than a relatively hard perlite phase. Even when the Fe structures of the outer layer 3 comprise a ferrite phase as a main constituent, a situation that may have adverse effects on durable life of the sintered gear 1 does not basically occur in, for example, the sintered gear 1 that receives a load, which is not too high. When the aspects of strength and cost are taken into account, it is preferred that sintering of the green compact M be performed under an atmosphere of gas containing carbon such as RX gas. However, when sintering is performed under an atmosphere containing carbon, as compared to the case where sintering is performed under an atmosphere containing carbon (for example, an RX gas atmosphere), there is an advantage in that both the outer layer 3 and the inner layer 2 forming the sintered gear 1 can be increased in accuracy. This is mainly derived from the fact that a dimension change in the Fe structures along with sintering is smaller in a ferrite phase than in a perlite phase.

As described above, even when the green compact M is sintered under an atmosphere of gas free of carbon, the sintering temperature is set to be higher than the melting point of the low-melting-point metal powder (in this case, the Sn powder) contained in the green compact of the first powder M1 and to be lower than the melting point of Cu as in the case where the green compact M is sintered under an atmosphere of gas containing carbon.

In the embodiment described above, the graphite powder is not contained in the first powder M1 for forming the outer layer 3. However, an appropriate amount of the graphite powder may be blended in the first powder M1.

Further, in the embodiment described above, the sliding surface A with respect to the shaft S in the sintered compact M' (sintered gear 1) is subjected to sizing processing as plastic working, to thereby enhance the size correction (improvement in accuracy) of the sliding surface A, and the strength and abrasion resistance. However, it is sufficient to perform the sizing processing as necessary, and the sizing processing is not necessarily required.

Further, for example, the lateral sectional shape of the radially outer surface of the inner layer 2 (or the radially inner surface of the outer layer 3) can be set to any form. That is, the lateral sectional shape of the radially outer surface of the inner layer 2 may also be formed into, for example, a corrugated form in which concave portions and convex portions are alternately arranged in the circumferential direction (not shown). With this, the contact area between the inner layer 2 and the outer layer 3 is increased, and hence the binding strength of both the layers 2 and 3 can be further increased. When the above-mentioned manufacturing method is employed, the lateral sectional shape of the radially outer surface of the inner layer 2 follows the lateral sectional shape of the radially inner surface of the partition member 14 (see FIG. 3 and the like) to be used in the compression molding step. Therefore, the lateral sectional shape of the radially outer surface of the inner layer 2 can be changed merely by changing the shape of the partition member 14 to be used.

Further, the sintered gear 1 described above can be used as, for example, an idler gear mounted in a developing part, a photosensitive part, a fixing part, or the like in an image forming apparatus, for example, a copying machine or a laser beam printer, and a peripheral part thereof, as well as the planetary gear forming the planetary gear speed reduction mechanism.

The case where the first aspect of the present invention is applied to the sintered gear 1 serving as a sintered machine part is described above. However, the first aspect of the present invention can also be suitably applied to another sintered machine part, in particular, a sintered machine part (for example, a pulley or the like) that rotates while sliding with respect to a shaft inserted into an inner periphery along with an input of a load onto a radially outer surface from another member.

Now, a second aspect of the invention of the present application is described with reference to the drawings.

FIG. 13A and FIG. 13B are a vertical sectional view, respectively, and a horizontal sectional view of a sintered bearing 101 that is a kind of a sintered machine part (machine part made of a sintered metal) . The sintered bearing 101 illustrated in FIG. 13A and FIG. 13B is suitable for use, for example, in a joint part configured to rotatably joint arms of a construction machine, for example, a hydraulic shovel car or a bulldozer. The sintered bearing 101 integrally comprises a circular cylindrical bearing layer 102 arranged on a radially inner side and having a bearing surface C on a radially inner surface 102a, and a circular cylindrical base layer 103 arranged on a radially outer side and having a mount surface D with respect to a member to be mounted (arm) (not shown) on a radially outer surface 103a, under a state in which the bearing layer 102 and the base layer 103 are held in contact with each other.

Inner pores of the sintered bearing 101 can be impregnated with a lubricant such as lubricating oil. With this, abrasion of the bearing surface C can be suppressed or prevented. The oil content of the entire sintered bearing 101 is, for example, from 10 vol% to 25 vol%, preferably from 15 vol% to 25 vol%. When the oil content is less than 10 vol%, desired sliding characteristics cannot be maintained and exhibited stably over a long period of time. When the oil content is more than 25 vol%, an inner pore ratio is increased, and hence there is a risk in that the mechanical strength required in the sintered bearing 101 may not be secured.

The sintered bearing 101 described above has different metal compositions between the bearing layer 102 on the radially inner side and the base layer 103 on the radially outer side. From the viewpoint of enhancing the sliding characteristics of the sliding surface C arranged on the radially inner surface 102a, the bearing layer 102 contains, for example, copper by 10 mass% to 30 mass% and the remainder mainly formed of iron. Meanwhile, the base layer 103 having the mount surface D with respect to the member to be mounted on the radially outer surface 103 is required to have high mechanical strength, and hence the base layer 103 is mainly formed of iron.

The sintered bearing 101 having the above-mentioned configuration is manufactured mainly through the compression molding step of obtaining a green compact 101' (see FIG. 23), the sintering step of sintering the green compact 101' to obtain a sintered compact, and the oil impregnation step of impregnating the inner pores of the sintered compact with a lubricant such as lubricating oil in the stated order. Now, an embodiment of each step is described in detail mainly on the compression molding step to which the technical measures according to the second aspect of the present invention are applied.

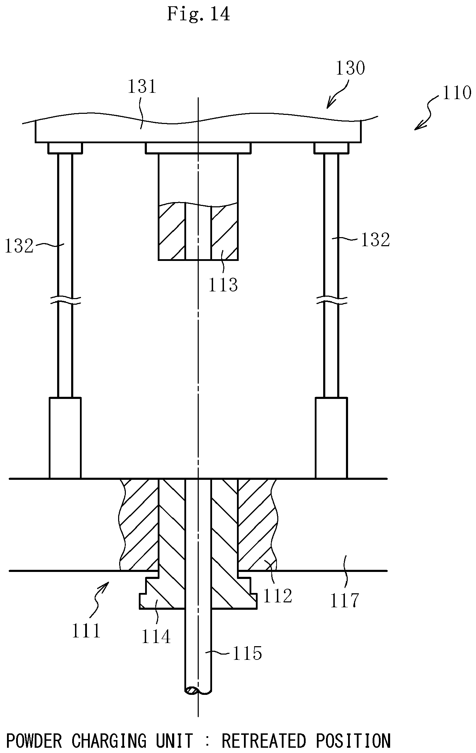

The compression molding step is a step of obtaining the circular cylindrical green compact 101' (see FIG. 23) substantially conforming to the shape of the sintered bearing 101, more specifically, obtaining the green compact 101' that integrally comprises first and second compression molding layers 102' and 103' respectively serving as the circular cylindrical bearing layer 102 and the circular cylindrical base layer 103 through the sintering step. The green compact 101' is obtained by simultaneously compressing first powder N1 molded into the first compression molding layer 102' and second powder N2 molded into the second compression molding layer 103'. Now, the compression molding step is described with reference to FIG. 14 to FIG. 23.

First, the overview of a molding device (molding die device) 110 to be used in the compression molding step is described with reference to FIG. 14, FIG. 15, and FIG. 18. The molding device 110 mainly comprises a molding die 111, a powder charging unit 120, a lifting and lowering unit 130 configured to hold an upper punch 113 of the molding die 111 so as to lift and lower the upper punch 113, and a press unit (not shown) configured to lift and lower the lifting and lowering unit 130 (upper punch 113).

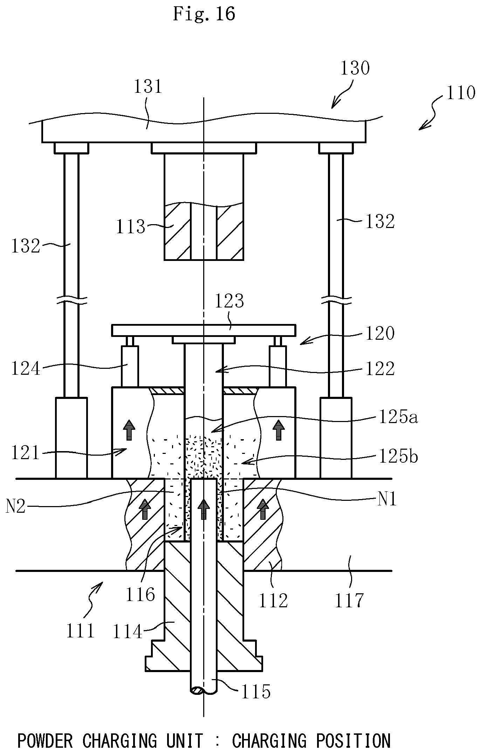

The molding die 111 comprises a circular cylindrical die 112 configured to form a cavity 116 (see FIG. 16 and the like) along an inner periphery (mold a radially outer surface of the green compact 101'), a core 115 arranged along the inner periphery of the die 112 and configured to mold a radially inner surface of the green compact 101', and a pair of the upper punch 113 and a lower punch 114 configured to form an upper end surface and a lower end surface of the green compact 101'. The upper punch 113 and the lower punch 114 are relatively lifted and lowered with respect to the die 112 and the core 115. In the molding die 111 according to this embodiment, the die 112 and the core 115, and the upper punch 113 held by the lifting and lowering unit 113 form a movable side, and the lower punch 114 forms a stationary side. The die 112 is held by a first lifting and lowering table 117 that is driven to be lifted and lowered, and the core 115 is driven to be lifted and lowered together with the first lifting and lowering table 117 (die 112) .

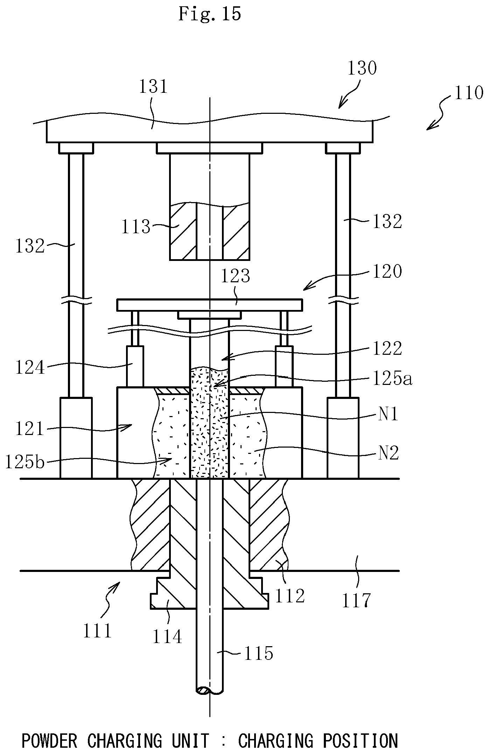

As illustrated in FIG. 15, the powder charging unit 120 comprises a casing 121, a partition member 122 configured to partition an inner space of the casing 121 into an inner accommodating part 125a and an outer accommodating part 125b, and a support mechanism configured to support the partition member 122 so that the partition member 122 can be inserted into and removed from the casing 121 and the cavity 116 of the molding die 111. The support mechanism mainly comprises a support member 123 configured to support an upper end portion of the partition member 122 and a pair of cylinders 124 for lifting and lowering configured to support the support member 123 (and the partition member 122) so as to lift and lower the support member 123 (and the partition member 122). Both the casing 121 and the partition member 122 are each formed of a cylindrical body having an open lower end. The inner accommodating part 125a and the outer accommodating part 125b are charged with the first powder N1 that is to be molded into the first compression molding layer 102' and the second powder N2 that is to be molded into the second compression molding layer 103', respectively. The capacity of the inner accommodating part 125a is set to be larger than that of a radially inner side region to be charged with the first powder N1 of the cavity 116. Further, the capacity of the outer accommodating part 125b is set to be larger than that of a radially outer side region to be charged with the second powder N2 of the cavity 116.

In this case, the first powder N1 to be used in this embodiment comprises, in conformity with the bearing layer 102, mixed powder of copper powder and iron powder, for example, containing copper powder by 10 mass% to 30 mass% and the remainder being formed of iron powder. Meanwhile, the substantially entire part of the second powder N2 comprises iron powder in conformity with the base layer 103.

When the lifting and lowering cylinders 124 are in an extension limit state illustrated in FIG. 15, a lower end of the casing 121 and a lower end of the partition member 122 are flush with each other.

The powder charging unit 120 having the above-mentioned configuration is configured to reciprocally move between a charging position, at which the first powder N1 loaded into the inner accommodating part 125a and the second powder N2 loaded into the outer accommodating part 125b can be simultaneously charged into the cavity 116, and a retreated position separated from the cavity 116 in the radial direction (radial direction of the green compact 101' to be formed). Powder supply tubes (not shown) are connected to the inner accommodating part 125a and the outer accommodating part 125, respectively. After the powder charging unit 120 performs one cycle operation (of moving from the retreated position to the charging position, to thereby charge the first and second powders N1 and N2 into the cavity 116, and thereafter moving from the charging position to the retreated position), a predetermined amount of the first powder N1 and a predetermined amount of the second powder N2 are automatically supplied (replenished) into the inner accommodating part 125a and the outer accommodating part 125b, respectively, through the powder supply tubes.

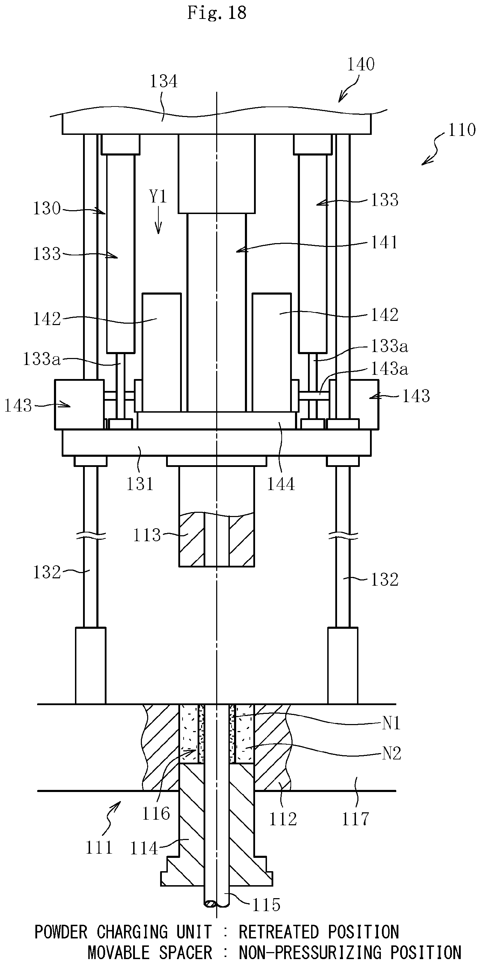

The lifting and lowering unit 130 comprises a second lifting and lowering table 131 configured to hold the upper punch 113 so as to lift and lower the upper punch 113, a pair of support pillars 132 configured to guide and move the second lifting and lowering table 131 upward and downward (see, for example, FIG. 14 for the foregoing), a pressurizing force transmission part 140 (see FIG. 18 and the like) configured to transmit a downward pressuring force applied from the press unit (not shown) to the upper punch 113, and a support table 134 arranged on an upper side of the second lifting and lowering table 131. The second lifting and lowering table 131 is supported by the support table 134 through intermediation of a pair of cylinders 133 for lifting and lowering (for example, air cylinders). The press unit (not shown) in the molding device 110 is arranged on an upper side of the support table 134.

As illustrated in FIG. 18 and FIG. 20 to FIG. 22, the pressurizing force transmission part 140 is mainly arranged coaxially with the upper punch 113 and comprises a pressurizing member 141 mounted and fixed onto the support table 134, a pair of movable spacers 142 and 142, and a pair of air cylinders 143 configured to cause each of the movable spacers 142 and 142 to advance and retreat in a radial direction (horizontal direction) of the green compact 101' to be molded. A guide member 144 configured to guide the advance and retreat of the movable spacers 142 is arranged on an upper surface of the second lifting and lowering table 131.

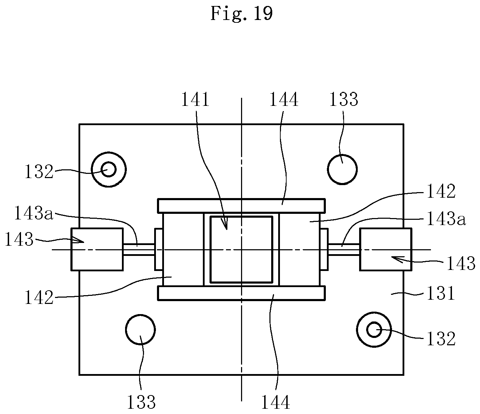

As illustrated in FIG. 19, the pair of support pillars 132 and 132 are arranged symmetrically on one diagonal line extending through the center of the second lifting and lowering table 131 (axial center position of the pressurizing member 141) in plan view. Further, the pair of cylinders 133 for lifting and lowering are arranged symmetrically on another diagonal line extending through the center of the second lifting and lowering table 131 in plan view.

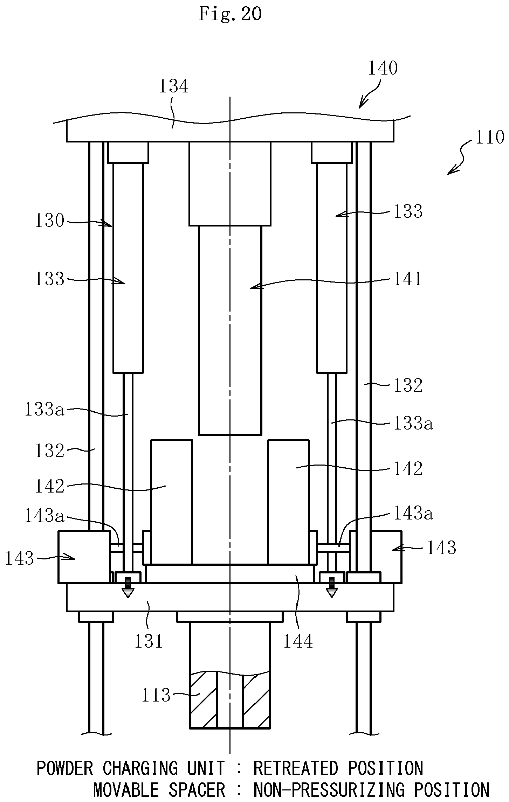

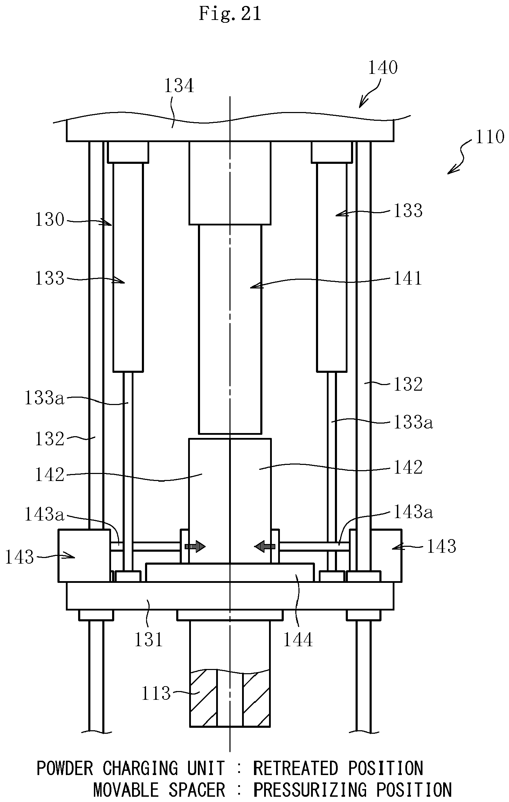

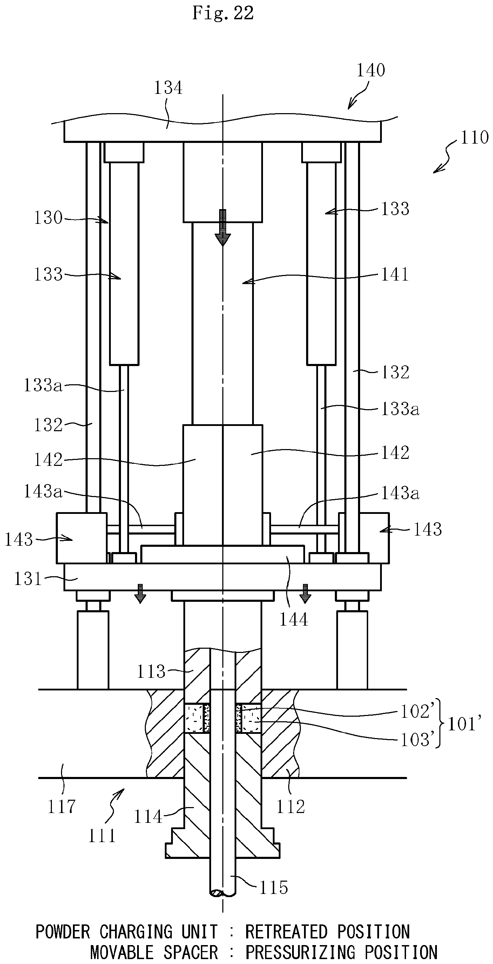

Each of the movable spacers 142 is configured to reciprocally move (shift) between a pressurizing position (see FIG. 21 and FIG. 22) at which a pressurizing force for simultaneously compressing the powders N1 and N2 charged into the cavity 116 between the upper punch 113 and the lower punch 114 can be applied (transmitted) to the upper punch 113, and a non-pressurizing position (see FIG. 18 and FIG. 20) at which the above-mentioned pressurizing force is not applied to the upper punch 113. More specifically, when the upper punch 113 (lifting and lowering unit 130) is lowered from a top dead center, rod parts 143a of the air cylinders 143 expand, and the movable spacers 142 move from the non-pressurizing position to the pressurizing position (see FIG. 18 and FIG. 20 to FIG. 22). In contrast, when the upper punch 113 is lifted from a bottom dead center, the rod parts 143a of the air cylinders 143 contract, and the movable spacers 142 move from the pressurizing position to the non-pressurizing position.

The molding device 110 mainly has the above-mentioned configuration and automatically molds the green compact 101' through the following procedures.

First, as illustrated in FIG. 14, under a state in which upper end surfaces of the die 112, the lower punch 114, and the core 115 are flush with each other (under a state in which the cavity 116 is not formed in the molding die 111), the powder charging unit 120 positioned at the retreated position is moved to the charging position (coaxial position with the cavity 16) at which the powders N1 and N2 can be charged into the cavity 116 (see FIG. 15). In this case, the powder charging unit 120 comprising the casing 121 is moved while being pressurized downward by a pressure mechanism (not shown), and the lower end of the casing 121 stops while being pressed against the upper end surface of the die 112 (first lifting and lowering table 117) at the charging position. Further, in this case, the lifting and lowering unit 130 holding the upper punch 113 so as to lift and lower the upper punch 113 is, for example, not operated and is positioned substantially at a top dead center. Although not shown in detail, after the powder charging unit 120 moves to the charging position, the cylinders 124 for lifting and lowering contract by a predetermined amount. With this, the partition member 122 is pressurized downward, and the lower end of the partition member 122 is pressed against the upper end surface of the lower punch 114.

As illustrated in FIG. 15, the inner space of the powder charging unit 120 having moved to the charging position is loaded with the first powder N1 and the second powder N2 under a state in which the first powder N1 and the second powder N2 are mutually separated in the radial direction of the green powder 101' to be molded. Specifically, the first and second powders N1 and N2 are arranged in an outer portion of the molding die 111, in which the cavity 116 is not formed, under a state in which the first and second powders N1 and N2 are mutually separated in the radial direction of the green compact 101'. At least one of the inner accommodating part 125a and the outer accommodating part 125b is loaded with raw material powder in an amount larger than that of the first and second powders N1 and N2 to be charged into the radially inner side region and the radially outer side region of the cavity 16, respectively.

Next, as illustrated in FIG. 16, the first lifting and lowering table 117 is lifted to move the die 112 and the core 115 upward with respect to the lower punch 114. Further, simultaneously with this, the cylinders 124 for lifting and lowering of the powder charging unit 120 are contracted to move only the casing 121 upward. Specifically, the die 112 and the core 115 are lifted with respect to the lower punch 114 and the partition member 122. With this, the cavity 116 is formed gradually in the molding die 111 under a state in which the lower end of the partition member 122 is pressed against the upper end surface of the lower punch 114, and simultaneously, the first powder N1 and the second powder N2 are charged into the radially inner side region and the radially outer side region of the cavity 116 under a state in which the first powder N1 and the second powder N2 are mutually separated in the radial direction of the green powder 101' to be molded.

As described above, both the powders N1 and N2 are arranged in the outer portion of the molding die 111, in which the cavity 116 is not formed, under a state in which the powders N1 and N2 are mutually separated in the radial direction of the green compact 101' to be molded, and then the movable side and the stationary side of the molding die 111 are relatively moved while the mutually separated state of the powders N1 and N2 is maintained. With this, the formation of the cavity 116 and the simultaneous charging of both the powders N1 and N2 into the cavity 116 can be simultaneously performed. As a result, the powder charging operation to the cavity 116 can be performed smoothly and efficiently.

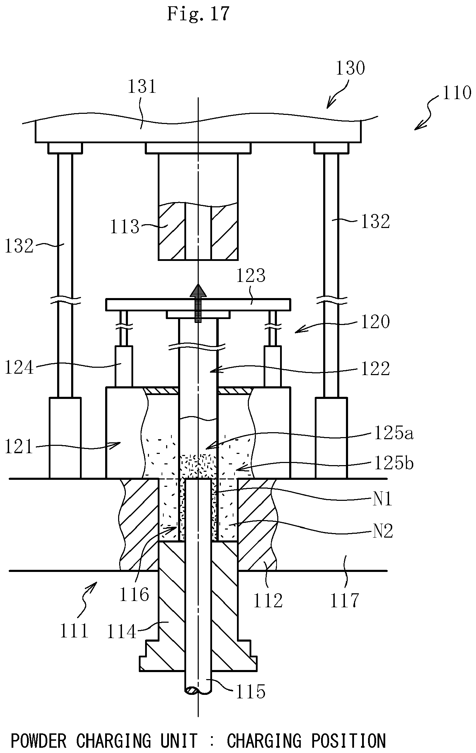

After both the powders N1 and N2 are charged into the cavity 116 as described above, the cylinders 124 for lifting and lowering of the powder charging unit 120 are expanded, and the partition member 122 is removed from the cavity 116 (see FIG. 17) . Specifically, the mutually separated state of both the powders N1 and N2 in the radial direction of the green powder 101' to be molded is cancelled. With this, the first powder N1 and the second powder N2 are brought into contact with each other in the cavity 116. In this case, as described above, at least one of the inner accommodating part 125a and the outer accommodating part 125b of the powder charging unit 120 is loaded with powder in an amount larger than that of the first powder N1 and the second powder N2 to be respectively charged into the radially inner side region and the radially outer side region of the cavity 116 (specifically, the above-mentioned cancelling operation of the mutually separated state is performed under a state in which at least one kind of a plurality of kinds of raw materials to be charged into the cavity 116 can be replenished into the cavity 116). Thus, the powder loaded into one or both of the accommodating parts 125a and 125b is charged into a space formed by removing the partition member 122 from the cavity 116. With this, the cavity 116 defined by a radially inner surface of the die 112, a radially outer surface of the core 115, and the upper end surface of the lower punch 114 is filled with the first powder N1 and the second powder N2, and hence the green compact 101' with predetermined density can be molded. Then, as illustrated in FIG. 18, the powder charging unit 120 is moved from the charging position to the retreated position.

Next, the lifting and lowering unit 130 (upper punch 113) is lowered to simultaneously compress the first and second powders N1 and N2 charged into the cavity 116 between the upper punch 113 and the lower punch 114. Thus, the green compact 101' is molded, which comprises the first compression molding layer 102' molded by subjecting the first powder N1 to compression molding and the second compression molding layer 103' molded by subjecting the second powder N2 to compression molding.

Here, in the molding device 110 according to this embodiment, the downward movement of the upper punch 113, that is, the compression of the first and second powders N1 and N2 charged into the cavity 116 is performed as follows.

First, when the press unit (not shown) is driven to cause the support table 134 to move downward (the support table 134 starts being pressurized downward), rod parts 133a of the cylinders 133 for lifting and lowering expand as illustrated in FIG. 20. With this, the second lifting and lowering table 131 (rapidly) moves downward so that upper end surfaces of the movable spacers 142 and 142 are positioned on a lower side of a lower end surface of the pressurizing member 141. Then, as illustrated in FIG. 21, the rod parts 143a of the pair of air cylinders 143 and 143 expand, and both the movable spacers 142 and 142 are arranged on a lower side of the pressurizing member 141 (in the illustrated example, inner surfaces of both the movable spaces 142 and 142 are brought into abutment against each other at the axial center position of the upper punch 113 and the pressurizing member 141). With this, the movable spacers 142 and 142 move from the non-pressurizing position at which the pressurizing force for compressing the first and second powders N1 and N2 charged into the cavity 116 between the upper punch 113 and the lower punch 114 is not applied (transmitted) to the upper punch 113 to the pressurizing position at which the above-mentioned pressurizing force can be applied (transmitted). Then, when the support table 134 is further pressurized downward by the press unit while this state is maintained, the lower end surface of the pressurizing member 141 is brought into abutment against the upper end surfaces of the movable spacers 142 and 142, and the pressurizing force from the press unit is transmitted to the upper punch 113 through the support table 134, the pressurizing member 141, the movable spacers 142 and 142, and the second lifting and lowering table 131. With this, the first and second powders N1 and N2 are simultaneously compressed with the upper punch 113 and the lower punch 114, and the green compact 101' in which the first compression molding layer 102' and the second compression molding layer 103' are laminated in the radial direction is molded (see FIG. 22).

Although not shown, after molding of the green compact 101', the die 112 (first lifting and lowering table 117) and the core 115 are lowered with respect to the lower punch 114 while the lifting and lowering unit 130 is lifted in a reversed order of the procedures described above. Thus, the green compact 101' is removed from the cavity 116 of the molding die 111. Then, when the upper punch 113 moves to the top dead center, one cycle operation for molding of the green compact 101' is completed. The green compact 101' removed from the cavity 116 is driven out of the molding device 101 as one cycle operation for molding of the subsequent green compact 101' is started to cause the powder charging unit 120 to move from the retreated position to the charging position.

The green compact 101' obtained as described above is subjected to heating and sintering under predetermined conditions in the sintering step (not shown) to form a sintered compact. When the green compact 101' is sintered, the first compression molding layer 102' is sintered together with the second compression molding layer 103' under a state of being held in contact with the second compression molding layer 103'. Therefore, after sintering of the green compact 101', a sintered compact in which the bearing layer 102 and the base layer 103 are integrated can be obtained.

The sintered compact obtained in the sintering step is subjected to dimension correction through sizing or the like as necessary, and inner pores of the sintered compact are impregnated with a lubricant such as lubricating oil in the oil impregnation step. With this, the sintered bearing 101 illustrated in FIG. 13 is completed.

As described above, the molding device 110 of the green compact 101' comprises the powder charging unit 120 comprising the partition member 122 which is arranged so as to be inserted into and removed from the cavity 116 of the molding die 111 and which enables, at a time of being inserted into the cavity 116, the plurality of kinds of raw material powders (first and second powders N1 and N2) to be charged into the cavity 116 under a state in which the plurality of kinds of raw material powders are mutually separated in the radial direction of the green compact 101'.

In the molding device 110 having such a configuration, both the powders N1 and N2 can be charged into the cavity 116 under a state in which the powders N1 and N2 are laminated in the radial direction of the green compact 101' to be molded, merely through the procedures of (1) inserting the partition member 122 arranged in the single powder charging unit 120 loaded with the first and second powders N1 and N2 into the cavity 116 (arranging the partition member 122 in the cavity 116), and in this state, simultaneously charging both the powders N1 and N2 loaded into the powder charging unit 120 into the cavity 116, and thereafter (2) removing the partition member 122 arranged in the cavity 116 from the cavity 116.

In other words, through employment of the technical measures according to the second aspect of the present invention, when both the powders N1 and N2 are charged into the cavity 116 under a state in which the powders N1 and N2 are laminated in the radial direction of the green compact 101' to be molded, it is not necessary to operate a plurality of shoe boxes (corresponding to the powder charging unit 120) in a step-by-step manner, to thereby charge the raw material powders into the cavity in a step-by-step manner, and to use a molding die comprising a plurality of lower punches and partition members that are independently lifted and lowered and operate the plurality of lower punches and partition members in a step-by-step manner. Therefore, not only a period of time required from the start of the operation of the molding device 110 to the completion of the charging of the powders into the cavity 116, but also one cycle time for molding of the green compact 101' can be significantly shortened. Further, the molding device 110 can be simplified and reduced in size as a whole.

Further, as the lifting and lowering unit 130 configured to hold the upper punch 113 so as to lift and lower the upper punch 113, the molding device 110 employs the lifting and lowering unit 130 comprising the movable spacers 142. The movable spacers 142 reciprocally move between the pressurizing position at which the pressurizing force for compressing the powders N1 and N2 charged into the cavity 116 between the upper punch 113 and the lower punch 114 can be applied (transmitted) to the upper punch 113, and the non-pressurizing position at which the above-mentioned pressurizing force is not applied to the upper punch 113. The movable spacers 142 are configured to move from the non-pressurizing position to the pressurizing position along with the downward movement of the lower punch 113, and move from the pressurizing position to the non-pressurizing position along with the upward movement of the upper punch 113.

With this, through selection and use of the movable spacers 142 having an appropriate vertical dimension, a vertically separated distance can be secured between the die 112 and the upper punch 113 so that the upper punch 113 and the powder charging unit 120 are prevented from interfering with each other during the powder charging process. Meanwhile, a stroke amount of the upper punch 113 in the vertical direction, which is required for the powder compressing process, can be reduced. Thus, an excessive increase in size not only in the press unit configured to pressurize the upper punch downward but also in the molding device 110, can be prevented. Further, the green compact 101' having a multi-layer structure can be molded through use of an existing molding device (for example, a molding device for molding a green compact having a single-layer structure).

Further, the movable spacers 142 are caused to reciprocally move between the pressurizing position and the non-pressurizing position by causing the movable spacers 142 to advance and retreat in the radial direction of the green compact 101'. Therefore, as a drive mechanism configured to reciprocally move the movable spacers 142 between the above-mentioned two positions, a mechanism having a simple structure such as the air cylinders 143 can be employed.

Further, the guide member 144 configured to guide the reciprocal movement of the movable spacers 142 between the above-mentioned two positions is further arranged in the lifting and lowering unit 130, and hence the movable spacers 142 can be guided and moved accurately to a predetermined pressurizing position. Thus, the first and second powders N1 and N2 charged into the cavity 116 can be appropriately compressed.

With the foregoing, according to the second aspect of the present invention, the green compact 101' having a multi-layer structure including a plurality of compression molding layers (in the foregoing, the first compression molding layer 102' and the second compression molding layer 103') laminated in the radial direction can be molded efficiently and with high precision.

The molding device 110 and molding method for the green compact 101' according to the embodiment of the second aspect of the present invention are described above. However, the molding device 110 and molding method can be modified appropriately within the scope not departing from the spirit of the present invention.

For example, in the molding device 110 described above, the molding die 111 is used in which the die 112 and the core 115 form the movable side, and the lower punch 114 forms the stationary side. However, in contrast, the molding die 111 can also be used in which the lower punch 114 forms the movable side and the die 112 and the core 115 form the stationary side.

Further, although not shown, the movable spacers 142 can also be formed of a single member instead of being divided in the radial direction of the green compact 101' to be molded.

Further, in the embodiment described above, the molding device 110 (and the molding method) according to the second aspect of the present invention are employed for molding of the hollow green compact 101'. However, the molding device 110 can be suitably used also for molding of a solid green compact. Specifically, for molding of the solid green compact, it is only necessary to use the molding die 111 without the core 115. In this relation, the above-mentioned molding device 110 can be suitably used also for molding of a green compact to be a sintered machine part (for example, a gear or a cam) other than the sintered bearing.

Further, in the embodiment described above, the present invention is applied to molding of the green compact 101' having a double-layer structure in which two compression forming layers are laminated in the radial direction. However, the molding device 110 can be suitably applied also to molding of the green compact 101' in which three or more compression molding layers are laminated in the radial direction. For example, for molding of the green compact 101' having a three-layer structure, although not shown, it is only necessary to use, as the powder charging unit 120, a powder charging unit comprising the partition member 122 which is arranged so as to be inserted into and removed from the cavity 116 (and the casing 121) and which enables, at a time of being inserted into the cavity 116, three kinds of raw material powders to be charged into the cavity 116 under a state in which the three kinds of raw material powders are mutually separated in the radial direction (in other words, a powder charging unit comprising the partition member 122 which partitions the inner space of the casing 121 into three spaces and which is arranged so as to be inserted into and removed from the cavity 116 and the casing 121).

The technical measures according to the second aspect of the present invention have a feature of enabling the process of charging a plurality of kinds of raw material powders under a state in which the plurality of kinds of raw material powders are laminated in the radial direction of the green compact to be molded merely through the single process as described above. Therefore, when the technical measures according to the second aspect of the present invention is applied to molding of the green compact 101' having a multi-layer structure of three or more layers, the green compact 101' having a multi-layer structure of three or more layers can be molded remarkably efficiently and at low cost.

The present invention further pertains in embodiment (1) to a sintered machine part, which is formed of a sintered compact and which rotates in conjunction with an input of a load from another member onto a radially outer surface while sliding with respect to a shaft inserted along an inner periphery,
wherein the sintered compact comprises an inner layer containing Cu and an outer layer sintered together with the inner layer under a state of being held in contact with the inner layer,
wherein the outer layer comprises, as main components, Fe, Cu, and a low-melting-point metal having a melting point lower than a melting point of Cu, and a metal structure of the outer layer comprises, as main constituents, Fe structures and alloy structures of Cu and the low-melting-point metal, which exist at a grain boundary of the Fe structures and bind the Fe structures to each other.

The present invention further pertains in embodiment (2) to the sintered machine part according to embodiment (1), wherein the low-melting-point metal is at least one kind selected from the group consisting of Sn, Zn, and P.

The present invention further pertains in embodiment (3) to the sintered machine part according to embodiment (1) or (2), wherein the low-melting-point metal in the outer layer has a concentration of from 0.5 mass% to 2.0 mass%.

The present invention further pertains in embodiment (4) to the sintered machine part according to any one of embodiments (1) to (3),
wherein the inner layer further comprises Fe, and
wherein the inner layer has a Cu concentration of from 10 mass% to 30 mass% and an Fe concentration larger than the Cu concentration.

The present invention further pertains in embodiment (5) to the sintered machine part according to any one of embodiment (1) to (4), wherein the outer layer has a Cu concentration smaller than the Cu concentration of the inner layer.

The present invention further pertains in embodiment (6) to the sintered machine part according to any one of embodiments (1) to (5), wherein the outer layer is sintered together with the inner layer under an atmosphere containing carbon.

The present invention further pertains in embodiment (7) to the sintered machine part according to any one of embodiments (1) to (5), wherein the outer layer is sintered together with the inner layer under an atmosphere free of carbon.

The present invention further pertains in embodiment (8) to the sintered machine part according to any one of embodiments (1) to (7), wherein the inner layer has a radially inner surface that is a shaped surface shaped through plastic working.

The present invention further pertains in embodiment (9) to the sintered machine part according to any one of embodiments (1) to (8), wherein the radially outer surface is formed on a tooth surface.

The present invention further pertains in embodiment (10) to a device for molding a green compact, the green compact including a plurality of compression molding layers laminated in a radial direction of the green compact,
the device comprising:
a molding die comprising a cylindrical die having a cavity formed along an inner periphery of the cylindrical die and a pair of an upper punch and a lower punch configured to be lifted and lowered relative to the cavity; and
a powder charging unit configured to charge a plurality of kinds of raw material powders, which are molded into the plurality of compression molding layers, respectively, into the cavity, and
wherein the powder charging unit comprises a partition member which is arranged so as to be inserted into and removed from the cavity and which enables, at a time of being inserted into the cavity, the plurality of kinds of raw material powders to be charged into the cavity under a state in which the plurality of kinds of raw material powders are mutually separated in the radial direction.

The present invention further pertains in embodiment (11) to the device for molding a green compact according to embodiment (10), wherein the molding die comprises a core arranged along the inner periphery of the cylindrical die and configured to mold a radially inner surface of the green compact.

The present invention further pertains in embodiment (12) to the device for molding a green compact according to embodiment (10) or (11), wherein the powder charging unit is configured to reciprocally move between a charging position at which the powder charging unit is capable of charging the plurality of kinds of raw material powders into the cavity and a retreated position at which the powder charging unit is separated from the cavity in the radial direction.

The present invention further pertains in embodiment (13) to the device for molding a green compact according to any one of embodiments (10) to (12), further comprising a lifting and lowering unit configured to hold the upper punch so as to lift and lower the upper punch,
wherein the lifting and lowering unit comprises a movable spacer configured to reciprocally move between a pressurizing position, at which the lifting and lowering unit is capable of applying, to the upper punch, a pressurizing force for compressing the plurality of kinds of raw material powders in the cavity between the upper punch and the lower punch, and a non-pressurizing position, at which the lifting and lowering unit is prevented from applying the pressurizing force to the upper punch, and
wherein the movable spacer is configured to move from the non-pressurizing position to the pressurizing position along with downward movement of the upper punch and move from the pressurizing position to the non-pressurizing position along with upward movement of the upper punch.

The present invention further pertains in embodiment (14) to the device for molding a green compact according to embodiment (13), wherein the movable spacer is configured to advance and retreat in the radial direction of the green compact to reciprocally move between the pressurizing position and the non-pressurizing position.

The present invention further pertains in embodiment (15) to the device for molding a green compact according to embodiment (13) or (14), wherein the lifting and lowering unit comprises a guide member configured to guide reciprocal movement of the movable spacer between the pressurizing position and the non-pressurizing position.

The present invention further pertains in embodiment (16) to a method of molding a green compact, the green compact including a plurality of compression molding layers laminated in a radial direction of the green compact,
the method comprising:
simultaneously charging a plurality of kinds of raw material powders, which are molded into each of the plurality of compression molding layers, respectively, into a cavity of a molding die under a mutually separated state of the plurality of kinds of raw material powders in the radial direction of the green compact;
cancelling the mutually separated state; and
simultaneously compressing the plurality of kinds of raw material powders.

The present invention further pertains in embodiment (17) to the method of molding a green compact according to embodiment (16), further comprising:
arranging the plurality of kinds of raw material powders in an outer portion of the molding die without the cavity under the mutually separated state of the plurality of kinds of raw material powders in the radial direction of the green compact; and
relatively moving a movable side and a stationary side of the molding die while maintaining the mutually separated state to simultaneously perform formation of the cavity and charging of the plurality of kinds of raw material powders into the cavity.

The present invention further pertains in embodiment (18) to the method of molding a green compact according to embodiment (16) or (17), wherein the mutually separated state is cancelled under a state in which at least one kind of the plurality of kinds of raw material powders is capable of being charged into the cavity.

### Reference Signs List

- 1: sintered gear (sintered machine part)

- 2: inner layer
- 2a: radially inner surface
- 3: outer layer
- 10: molding die device
- 14: partition member
- 20: sintering furnace
- A: sliding surface
- B: load acting surface
- M: green compact
- M': sintered compact
- M1: first powder
- M2: second powder
- S: shaft
- 101: sintered bearing
- 101': green compact
- 102: bearing layer
- 102': first compression molding layer
- 103: base layer
- 103': second compression molding layer
- 110: molding device
- 111: molding die
- 112: die
- 113: upper punch
- 114: lower punch
- 115: core
- 116: cavity
- 120: powder charging unit
- 122: partition member
- 130: lifting and lowering unit
- 140: pressurizing force transmission part
- 142: movable spacer
- 143: air cylinder
- 144: guide member
- C: bearing surface
- D: mount surface
- N1: first powder
- N2: second powder

## Claims

1. A sintered machine part (1), which is formed of a sintered compact (M') and which rotates in conjunction with an input of a load from another member onto a radially outer surface while sliding with respect to a shaft (S) inserted along an inner periphery,
the sintered compact (M') comprising:
an inner layer (2) having a sliding surface (A) with respect to the shaft (S); and
an outer layer (3) sintered together with the inner layer (2) under a state of being held in contact with the inner layer (2), and having a load acting surface (B) which receives the load,
**characterized in that** the inner layer (2) comprises, as main components, Fe structures mainly composed of a perlite phase, and Cu structures, and in which adjacent metal structures are bond to each other in a solid phase,
wherein the outer layer (3) comprises, as main components, Fe, Cu, and a low-melting-point metal having a melting point lower than a melting point of Cu, and a metal structure of the outer layer (3) comprises, as main constituents, Fe structures mainly composed of a perlite phase and alloy structures of Cu and the low-melting-point metal, which exist at a grain boundary of the Fe structures and bind the Fe structures to each other,
wherein the low-melting point metal is at least one kind selected from the group consisting of Sn, Zn, and P, and
wherein the low-melting-point metal in the outer layer (3) has a concentration of from 0.5 mass% to 2.0 mass%.

2. The sintered machine part (1) according to claim 1, wherein the inner layer (2) has a Cu concentration of from 10 mass% to 30 mass% and an Fe concentration larger than the Cu concentration.

3. The sintered machine part (1) according to claim 1 or 2, wherein the outer layer (3) has a Cu concentration smaller than the Cu concentration of the inner layer (2).

4. The sintered machine part (1) according to any one of claims 1 to 3, wherein a free graphite is scattered in a metal structures of the inner layer (2).

5. The sintered machine part (1) according to any one of claims 1 to 4, wherein a surface opening ratio of the inner layer (2) is lower than that of the outer layer (3).

6. The sintered machine part (1) according to any one of claims 1 to 5, wherein the radially outer surface is formed on a tooth surface.
